# EUROPÄISCHE PATENTSCHRIFT

(11) **EP 1 363 376 B1**
(45) Veröffentlichungstag und Bekanntmachung des Hinweises auf die Patenterteilung: **17.10.2012**
(21) Anmeldenummer: 03450104.9
(22) Anmeldetag: 28.04.2003
(51) Int. Cl.: H02G 3/08

(54) **Kabeldurchführung**
Cable feedthrough
Traversée pour cable

(30) Priorität: 15.05.2002 AT 7452002
(43) Veröffentlichungstag der Anmeldung: 19.11.2003
(73) Patentinhaber: Eaton Industries (Austria) GmbH, 3943 Schrems (AT)
(72) Erfinder: Gegenbauer, Bernhard, 3830 Waidhofen/Thaya (AT)
(74) Vertreter: Leadbetter, Benedict

(56) Entgegenhaltungen:
- EP-A- 1 089 411
- GB-A- 1 388 916

## Beschreibung

Die Erfindung betrifft eine Kabeldurchführung gemäß dem Oberbegriff des Anspruches 1.

Eine solche Kabeldurchführung wurde z.B. durch die DE 39 43 777 C2 bekannt. Bei dieser bekannten Lösung weist die Folie an wenigstens einer Stelle eine zur Bildung eines Kabeldurchtritts abschneidbare hohle Noppe auf. Dabei können die Noppen von in die Folie eingearbeitete Wülsten umgeben sein.

Bei dieser bekannten Lösung weist die Folie und damit der gesamte Deckel eine erhebliche Bauhöhe auf. Außerdem werden bei Montagearbeiten die Noppen meist nicht sauber mit einem scharfen Messer abgeschnitten sondern meist mit einem Seitenschneider. Dadurch ergibt sich meist ein unsauberer ausgefranster Schnitt, wodurch die verbleibenden Abschnitte der Noppen leicht einreißen können und die angestrebte Dichtheit der Kabeldurchführung leidet.

Weiters wurde durch die DE GM 7025425 eine Kabeldurchführung bekannt, bei der ein Verschluss einer Öffnung einer Wandung eines Gehäuses einen Abschnitt aus einem flexiblen Material aufweist, indem durch Materialschwächung durchstoßbare Leitungseinführungen vorgesehen sind. Dabei gehen diese geschwächten, kreisförmigen Bereiche direkt in den übrigen ebenen Abschnitt des Verschlusses über. Dabei ergibt sich jedoch das Problem, dass einerseits dieser Bereich nur an einer Seite sichtbar ist und es beim Durchstoßen dieses Bereiches zu einer Verletzung des angrenzenden Bereiches kommen kann, wodurch die Gefahr eines weiteren Reißens der Abdeckung gegeben ist.

Durch die DE 21 09 548 B1 wurde eine Einführungsplatte zur abgedichteten Einführung von Kabel und Leitungen in gekapselte elektrische Schalt- und Verteilanlagen bekannt. Bei dieser sind mehrere durch eine entfernbare Schicht verschlossene Durchführungsstellen vorgesehen.

Dabei ist ein Träger mit Öffnungen für die Durchführungsstellen vorgesehen, wobei eine mindestens einseitig auf den Träger aufgebrachte gummielastische Schicht entfernbare Bereiche aufweist, deren Durchmesser kleiner als die Öffnungen des Trägers sind. Dabei sind diese entfernbaren Bereiche der gummielastischen Schichte von einem Wulst umgeben, der seinerseits über einen im wesentlichen ebenen ringförmigen Steg mit dem übrigen Bereich der gummielastischen Schicht verbunden ist.

Bei dieser Lösung ist zwar aufgrund des Wulstes ein gewisser Schutz gegen ein unbeabsichtigtes Einreißen der gummielastischen Schicht gegeben, doch ergibt sich der Nachteil, dass beim Durchziehen eines Kabels durch die vom Wulst begrenzte Öffnung erhebliche Zugkräfte auf den den Wulst haltenden Steg einwirken und dabei aufgrund der meist sehr beengten Platzverhältnisse kaum die Möglichkeit besteht, den Wulst abzustützen.

Dies kann ebenfalls zu einer Beschädigung oder dem Ausreißen des Wulstes führen.

Weiters wurde auch schon eine Membran mit einem in diese eingebetteten

Druckübertragungsstück bekannt. Dabei ist das Druckübertragungsstück in einem Wulst eingebettet, der über einen ringförmigen aufgewölbten Steg mit dem Rand der Membrane verbunden.

Ziel der Erfindung ist es, diese Nachteile zu vermeiden und eine Kabeldurchführung der eingangs erwähnten Art vorzuschlagen, die sich durch eine einfache Handhabung auszeichnet.

Erfindungsgemäß wird dies bei einer Kabeldurchführung der eingangs erwähnten Art durch die kennzeichnenden Merkmale des Anspruches 1 erreicht.

Durch die vorgeschlagenen Maßnahmen ergibt sich eine sehr flache Bauweise der Kabeldurchführung. Dabei ist auch sichergestellt, dass durch den aufgewölbten Steg eine gewisse Materialreserve der Kabeldurchführung gegeben ist. Dies erleichtert es ein Kabel durch die Durchführung zu ziehen und dabei den das Kabel umgebenden Wulst abzustützen.

Dadurch kann eine Überbeanspruchung der Durchführung aufgrund der Reibungskräfte zwischen Kabel und Wulst vermieden werden, wobei der Innendurchmesser des Wulstes in üblicherweise etwas geringer ist als der Außendurchmesser des Kabels.

Für Durchführungen mit größerem Durchmesser ist es vorteilhaft die Merkmale des Anspruches 2 vorzusehen.

Durch die Merkmale des Anspruches 3 kann die Durchführung sehr flach gehalten werden, wobei trotzdem eine ausreichende Materialreserve bei der eigentlichen Durchführung gegeben ist.

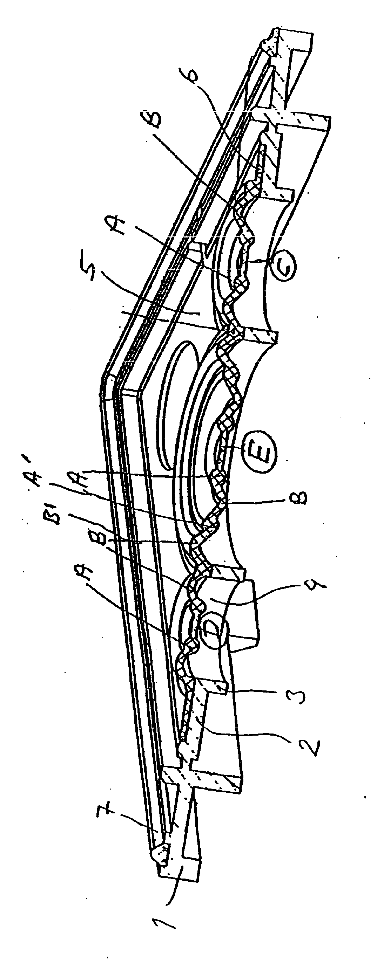

Die Erfindung wird nun anhand der Zeichnung näher erläutert, die eine geschnittene axonometrische Darstellung einer erfindungsgemäßen Kabeldurchführung zeigt.

Die dargestellte Kabeldurchführung weist einen Rahmen 1 aus einem im wesentlichen steifen Material auf, der ein Gitterwerk 2 hält. Dieses Gitterwerk 2 weist ringförmige Rippen 3 auf, die Felder 4 umschließen. Dabei sind die ringförmigen Rippen 3 durch Stege 5 miteinander verbunden.

An einer Seite ist das Gitterwerk 2 mit einer elastisch dehnbaren Folie 6 belegt. Diese weist im Bereich der Felder 4, bzw. im von den ringförmigen Rippen 3 umschlossenen Bereichen ringförmige Wülste A auf, die je einen leicht durchstoßbaren, zentral in den Feldern 4 angeordneten Bereiche C, D, E der Folie 6 umschließen. Die Wülste A, die die Bereiche C, D, die sich lediglich durch ihren Durchmesser unterscheiden, umgeben, sind über aufgewölbte ringförmige Stege B mit dem übrigen Bereich der Folie 6 verbunden.

Der den Bereich E umgebende Wulst A ist über einen ringförmigen Steg B mit einem weiteren Wulst A' verbunden, der seinerseits über einen weiteren aufgewölbten Steg B' mit dem übrigen Bereich der Folie 6 verbunden ist. Dies erlaubt es je nach der Größe des Durchmessers des durchzuführenden Kabels entweder den Bereich E, oder diesen samt dem Steg B zu durchstoßen.

Weiters ist in den Rahmen 1 ein Dichtungsgummi 7 eingelegt, mit dem die Kabeldurchführung gegen einen Rand einer entsprechenden Ausnehmung einer Gehäusewandung abgedichtet werden kann.

## Patentansprüche

1. Kabeldurchführung für eine Gehäusewandung, insbesondere für eine Wand oder Decke eines Verteilschrankes oder Zählerkastens, mit einem eine Ausnehmung der Gehäusewandung verschließenden Deckel, der zumindest ein Feld (4) aus einer elastisch dehnbaren Folie (6) aufweist, welches Feld (4) von einem steiferen Abschnitt (2, 3) des Deckels umrahmt ist, wobei die Folie (6) für die Bildung eines Kabeldurchtritts an wenigstens einer vorbestimmten Stelle (C, D, E) durchstoßbar ist, **dadurch gekennzeichnet, dass** der durchstoßbare Bereich (C, D, E) der Folie (6) von einem ringförmigen Wulst (A) umgeben ist, der über einen ringförmigen aufgewölbten Steg (B) mit einem angrenzenden Bereich der Folie (6) in Verbindung steht, der an das Feld (4) umrahmenden steiferen Abschnitten (2, 3) des Deckels anliegt.

2. Kabeldurchführung gemäß Anspruch 1, **dadurch gekennzeichnet, dass** der durchstoßbare Bereich (E) von mehreren konzentrisch angeordneten Wülsten (A, A') umgeben ist, wobei die Wülste (A, A') über ringförmige aufgewölbte Stege (B, B') miteinander verbunden sind.

3. Kabeldurchführung gemäß Anspruch 2, **dadurch gekennzeichnet, dass** benachbarte aufgewölbte Stege (B, B') in unterschiedlichen Richtungen gewölbt sind.

## Claims

1. Cable feedthrough for a housing wall, in particular for a wall or top of a distribution cabinet or meter box, with a cover which closes an opening in the housing wall and has at least one compartment (4) made of a resiliently expandable film (6) which compartment (4) is framed by a stiffer portion (2, 3) of the cover, wherein the film (6) can be penetrated at at least one predetermined point (C, D, E) to form a cable passage, **characterised in that** the region (C, D, E) of film (6) which can be penetrated is enclosed by an annular bead (A), which is joined via an annular curved bridge (B) to an adjacent region of the film (6) which is in contact with the stiffer portions (2, 3) of the cover which frame the compartment (4).

2. Cable feedthrough according to claim 1, **characterised in that** the region which can be penetrated (E) is enclosed by a plurality of concentrically arranged beads (A, A'), wherein the beads (A, A') are joined together via annular curved bridges (B, B').

3. Cable feedthrough according to claim 2, **characterised in that** adjacent curved bridges (B, B') are curved in different directions.

## Revendications

1. Traversée de câble pour une paroi de boîtier, en particulier pour une paroi ou un plafond de coffre de distribution ou de compteur, comprenant un couvercle fermant une cavité de la paroi de boîtier, lequel couvercle présente au moins une zone (4) formée d'une feuille dilatable en mode élastique (6), laquelle zone (4) est encadrée par une section plus rigide (2, 3) du couvercle, dans laquelle la feuille (6) peut être perforée pour la formation d'une traversée de câble en au moins un point prédéterminé (C, D, E), **caractérisée en ce que** la zone perforable (C, D, E) de la feuille (6) est entourée d'un bourrelet annulaire (A) qui est en liaison, via une nervure annulaire bombée (B), avec une zone limitrophe de la feuille (6), qui s'applique sur des sections plus rigides (2, 3) du couvercle encadrant la zone (4).

2. Traversée de câble selon la revendication 1, **caractérisée en ce que** la zone perforable (E) est entourée de plusieurs bourrelets (A, A') aménagés concentriquement, les bourrelets (A, A') étant raccordés l'une à l'autre via des nervures (B, B') annulaires bombées.

3. Traversée de câble selon la revendication 2, **caractérisée en ce que** des nervures voisines bombées (B, B') sont bombées dans des directions différentes.
